# EUROPÄISCHE PATENTANMELDUNG

(11) **EP 0 787 433 A2**
(43) Veröffentlichungstag der Anmeldung: **06.08.1997**
(21) Anmeldenummer: 97100188.8
(22) Anmeldetag: 08.01.1997
(51) Int. Cl.: A21D 8/06, A21D 15/00

(54) **Verfahren zur Herstellung von haltbaren Backwaren**

(30) Priorität: 08.01.1996 DE 19600397
(71) Anmelder: Bahlsen KG, 30655 Hannover (DE)
(72) Erfinder: Raschke, Hans-Dieter, Dr., 30966 Hemmingen (DE); Heitmeyer, Martin, 30163 Hannover (DE)
(74) Vertreter: Schmitz, Hans-Werner, Dipl.-Ing.

(57) **Zusammenfassung**

Die Erfindung bezieht sich auf ein Verfahren zur Herstellung von haltbaren Backwaren aus einer Backmasse, bei welchem eine Backform (1) mit der Backmasse gefüllt wird, die Backform (1) mit einem Deckel verschlossen wird, die Backmasse zusammen mit der Backform (1) bei geschlossenem Deckel (2) erwärmt wird, wobei die entstehenden Gase entweichen gelassen werden, die Backmasse mit der Backform (1) abgekühlt wird, wobei im Inneren der Backform (1) durch die Abkühlung der Backware ein ohne weiteres Zutun mittels des Deckels (2) einen luftdichten Verschluß der Backform (1) erzeugender Unterdruck entsteht, dadurch gekennzeichnet, daß ein Unterdruck in der vollständig abgekühlten Backform (1) in einem Bereich von 0,3 bis 0,5 bar erzeugt wird.

## Beschreibung

Die Erfindung bezieht sich auf ein Verfahren zur Herstellung von haltbaren Backwaren aus einer Kuchenmasse, bei welchem eine Backform mit der Kuchenmasse gefüllt wird, die Backform mit einem Deckel verschlossen wird, die Kuchenmasse zusammen mit der Backform bei geschlossenem Deckel erwärmt wird, wobei man die entstehenden Gase entweichen läßt, die Kuchenmasse mit der Backform abgekühlt wird, wobei im Inneren der Backform durch die Abkühlung der Backware ein ohne weiteres Zutun mittels des Deckels einen luftdichten Verschluß der Backform erzeugender Unterdruck entsteht.

Ein Verfahren zur Herstellung derartiger haltbarer Backwaren ist aus der EP 406 213 B1 bekannt. Unter Anwendung dieses Verfahrens ist es möglich, Backwaren, beispielsweise Kuchen, in einer Form zu backen und die Backform anschließend als Transportbehältnis für den Kuchen zu verwenden. Das beschriebene Verfahren gewährleistet, daß der Deckel durch den absinkenden Innendruck, welcher sich beim Abkühlen einstellt, fest schließend auf der Backform aufliegt.

Abhängig von der jeweils zu verwendenden Kuchen- oder Backmasse kann sich jedoch ein Innendruck oder Vakuum in einer Höhe aufbauen, welches zum einen sehr stabile Deckel erforderlich macht und zum anderen das Öffnen der Deckel erschwert. Hierbei können insbesondere beim Öffnungsvorgang unerwünschte Effekte auftreten, welche einer Implosion ähneln. All dies führt dazu, daß das Verfahren bei bestimmten Backmassen und bei einer bestimmten Ausgestaltung der Backform bzw. des Deckels nicht zu zufriedenstellenden Resultaten führt.

Der Erfindung liegt die Aufgabe zugrunde, ein Verfahren zur Herstellung von haltbaren Backwaren der genannten Art so weiterzubilden, daß der Deckel bei einfacher Ausgestaltung leicht und sicher geöffnet werden kann.

Erfindungsgemäß wird die Aufgabe dadurch gelöst, daß ein Unterdruck in der vollständig abgekühlten Backform in einem Bereich von 0,3 bis 0,5 bar erreicht wird.

Das erfindungsgemäße Verfahren zeichnet sich durch eine Reihe erheblicher Vorteile aus.

Durch den erfindungsgemäß vorgesehenen Unterdruck in einem Bereich von 0,3 bis 0,5 bar ist zum einen sichergestellt, daß der Deckel ausreichend fest schließt, zum anderen ist gewährleistet, daß der Deckel durch den jeweiligen Verbraucher problemlos geöffnet werden kann. Es entstehen keine Verletzungsgefahren durch Implosionen oder plötzliche Verformungen des Deckels. Weiterhin kann der Deckel selbst in einer weniger stabilen Ausgestaltung ausgebildet sein, es ist beispielsweise nur eine geringere Blechdicke erforderlich. Zusätzlich wird vermieden, daß der Deckel durch den starken Unterdruck während des Transports verformt wird und seine dichte Schließfunktion verliert.

In einer besonders günstigen Weiterbildung der Erfindung ist vorgesehen, daß die Abkühlung in zumindest zwei Stufen erfolgt, und daß nach einer ersten Abkühlstufe der bis zu diesem Zeitpunkt aufgetretene Unterdruck ausgeglichen wird.

Bei dem vorbekannten Verfahren kann, abhängig von der jeweiligen Backmasse ein Unterdruck im Bereich von 0,93 bis 0,96 bar auftreten, wenn die Backform mit der darin befindlichen Backmasse vollständig abgekühlt ist. Erfindungsgemäß erfolgt somit eine Halbierung oder Drittelung des Unterdrucks, welche sich in der bereits beschriebenen Weise als vorteilhaft erweist. Durch die Mehrstufige Abkühlung ist es möglich, den entstehenden Unterdruck gezielt zu beeinflussen bzw. den Unterdruck der vollständig abgekühlten Backform vorzugeben.

Der Ausgleich des Unterdrucks erfolgt bevorzugterweise durch Zufuhr von Gasen in den Innenraum der Backform. Besonders günstig ist es, wenn Inert-Gase zugeführt werden, beispielsweise Stickstoff oder Kohlensäure.

Für die Zufuhr der Gase ergeben sich vielfältige Möglichkeiten, besonders vorteilhaft ist es, wenn die Gase durch eine Öffnung in dem Deckel in den Innenraum der Backform einströmen können, wobei die Öffnung nach Ausgleich eines Unterdrucks vor der weiteren Abkühlung verschlossen wird. Die Öffnung kann beispielsweise durch Anstechen des Deckels eingebracht werden, das Schließen der Öffnung kann durch einen Kunststoff- oder Leimtropfen oder in ähnlicher Weise erfolgen.

In vorteilhafter Weiterbildung der Erfindung ist vorgesehen, daß der Ausgleich des Unterdrucks bei einem durch die Abkühlung hervorgerufenen Wert von im wesentlichen 0,5 bar erfolgt. Nach dem Backvorgang wird somit die Backform mit der darin befindlichen Backware so abgekühlt, daß ein Unterdruck von 0,5 bar vorliegt. Bei Kenntnis der Zusammensetzung der Backmasse ist es unschwer möglich, den entsprechenden Abkühlwert zu ermitteln.

Es versteht sich, daß in dem angegebenen Unterdruck-Wert vielfältige Zwischenstufen vorteilhaft sein können, abhängig von der Zusammensetzung der Backmasse sowie der Dimensionierung der Backform und des Deckels. Bei dem in dem EP-Patent 406 213 beschriebenen Verfahren, hat es sich als günstig erwiesen, wenn der Unterdruck in der vollständig abgekühlten Backform 0,3 bar beträgt.

Die der Erfindung zugrundeliegende Aufgabe, eine leichte und sichere Öffnung des Deckels zu ermöglichen, wird auch dadurch gelöst, daß der Deckel Mittel zu kontrollierten Öffnung aufweist. Besonders günstig kann es dabei sein, wenn am Deckelrand eine Aufreißlasche angebracht ist. Diese kann entweder einstückig mit dem Deckel ausgebildet sein, es ist jedoch auch möglich, die Aufreißlasche mittels eines Fügeverfahrens mit dem Deckel zu verbinden.

Um ein gezieltes Einreißen des Deckels sicherzustellen, kann es weiterhin vorteilhaft sein, wenn der Deckelrand benachbart zu der Aufreißlasche zumindest eine Anrißkerbe aufweist. Diese Kerbe dient zum Anreißen des Deckels und zur Auftrennung des Deckels im Bereich der an diesem angebrachten Dichtung. Somit wird vermieden, daß lediglich der Deckelrand verformt wird, während der mit der Dichtung versehene Bereich weiterhin auf dem Rand der Backform aufliegt. Zusätzlich kann es vorteilhaft sein, wenn der Deckel mit einer vorgestanzten Rißlinie versehen ist, die ein kontrolliertes Aufreißen des Deckels sicherstellt. Die Rißlinie kann dabei nur einseitig an dem Deckel ausgebildet sein, sie kann bogenförmig, gerade oder in ähnlicher Weise ausgestaltet sein.

Die Aufreißlasche sowie die Anrißkerbe und die Rißlinie sichern das kontrollierte Öffnen des Deckels und vermeiden Verletzungsgefahren.

Im folgenden wird die Erfindung anhand von Ausführungsbeispielen in Verbindung mit der Zeichnung beschrieben. Dabei zeigt:
- Fig. 1: eine schematische Seitenansicht eines Ausführungsbeispiels der erfindungsgemäßen Backform,
- Fig. 2: eine schematische Seitenansicht einer Ausführungsform des erfindungsgemäßen Deckels,
- Fig. 3: eine Draufsicht auf ein Ausführungsbeispiel eines erfindungsgemäßen Deckels mit Aufreißlasche und Rißlinie,
- Fig. 4: eine Draufsicht auf ein weiteres Ausführungsbeispiel eines erfindungsgemäßen Deckels, und
- Fig. 5: eine perspektivische Darstellung des Öffnungsvorganges.

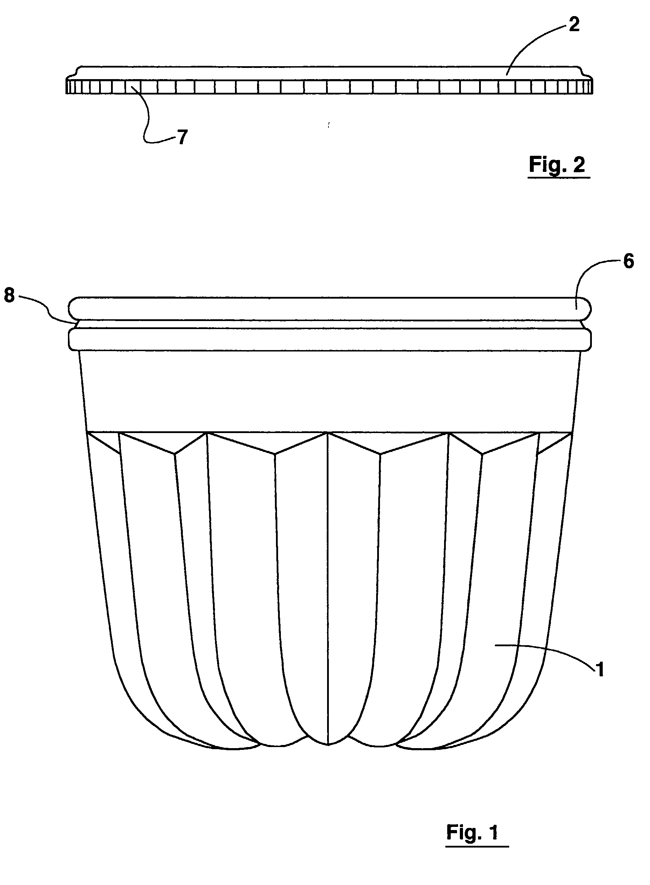

Die Fig. 1 und 2 zeigen in der Seitenansicht jeweils eine Backform und einen Deckel. Die Ausgestaltung der Backform, der Backvorgang selbst sowie die Grundzüge der Ausgestaltung und Wirkungsweise des Deckels sind in der EP 406 213 B1 beschrieben, auf welche hiermit Bezug genommen wird. Die Offenbarung dieser Druckschrift wird, um Wiederholungen zu vermeiden, Teil der vorliegenden Beschreibung.

Erfindungsgemäß wird die Backform 1 mit einer Backmasse gefüllt, wobei die Zusammensetzung sowie die Dimensionierung und der Füllgrad in der oben beschriebenen europäischen Patentschrift erläutert sind. Der Deckel 2 wird lose auf die Backform aufgelegt, er weist an seinem inneren Umfangsrand eine nicht dargestellte Dichtung auf, welche auf einem Rand 6 der Backform 1 aufliegt und durch den während des Backvorgangs auftretenden Unterdrucks die Dichtwirkung des Deckels unterstützt.

Der Deckel 2 ist mit einem Randbereich 7 versehen, welcher verformbar ausgebildet ist. Nach Einfüllen der nicht-dargestellten Kuchen- oder Backmasse kann der Randbereich des Deckels 7 soweit verformt werden, daß er in die umlaufende Ringnut 8 der Backform 1 eingreift. Auf diese Weise wird der Deckel 2 in seiner Lage fixiert, er liegt jedoch noch ausreichend lose auf, um die während des Backvorgangs entstehenden Gase aus dem Innenraum der Backform 1 entweichen zu lassen.

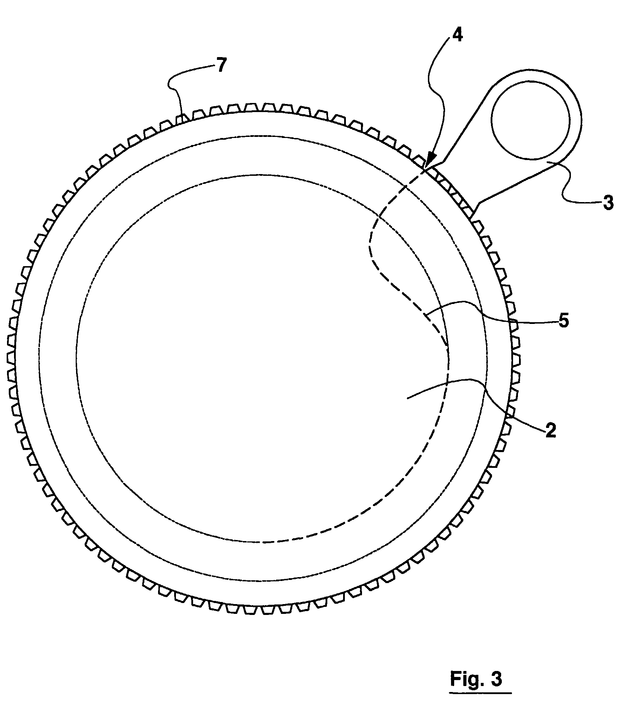

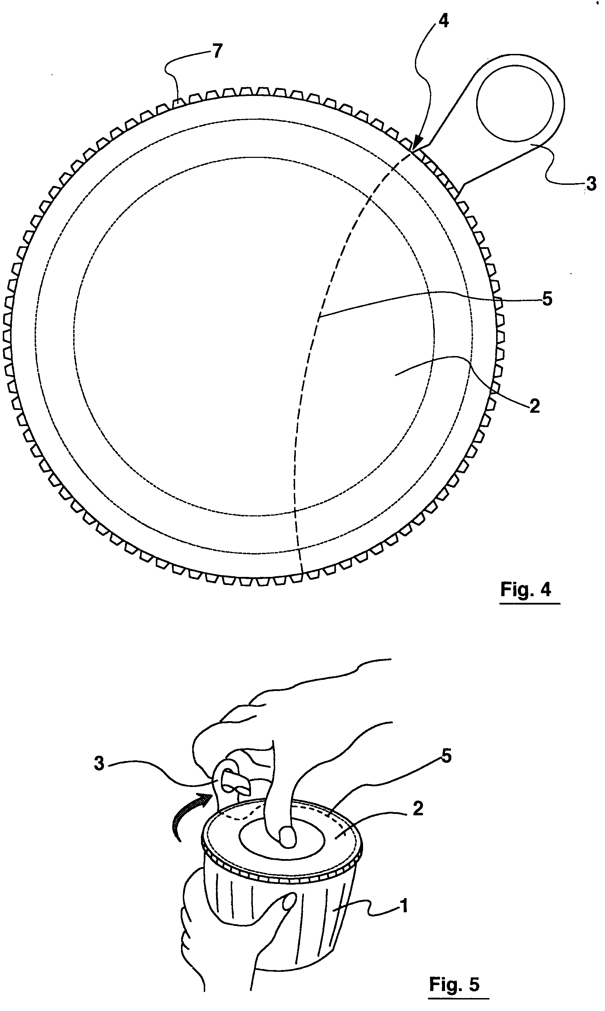

Die Fig. 3 und 4 zeigen in der Draufsicht in schematischer Weise zwei Ausgestaltungsbeispiele des erfindungsgemäßen Deckels 1. Dieser ist mit einer Aufreißlasche 3 versehen, welche, wie in Fig. 5 gezeigt, mit einem Finger ergriffen werden kann. Anschließend an die Aufreißlasche 3 ist zumindest eine Anrißkerbe 4 vorgesehen, welche beim Hochziehen der Aufreißlasche 3 zu einem Anriß des Deckels 2 führt. An die Anrißkerbe 4 schließt sich eine Rißlinie 5 an, welche in unterschiedlicher Weise, wie beispielsweise in Fig. 4 dargestellt, ausgebildet sein kann.

Aus der Darstellung der Fig. 5 ist ersichtlich, daß beim Öffnen des Deckels 2 kein Einstechen der Aufreißlasche 3 in dem Deckel erfolgt, vielmehr beginnt der Anreißvorgang an der Anrißkerbe 4. Auf diese Weise ist sichergestellt, daß der Innenraum der Backform 1 langsam belüftet wird, es erfolgt ein kontrolliertes, einfaches Öffnen ohne die Gefahr von Implosionen.

Durch den erfindungsgemäß vorgesehenen reduzierten Innendruck ist es möglich, den Deckel aus einem dünneren Material herzustellen und mit der beschriebenen Rißlinie zu versehen. Dies wäre bei einem stärkeren Unterdruck nicht möglich, da stets die Gefahr bestünde, daß der Deckel sich verformt oder in ungewünschter Weise aufreißt.

Durch die erfindungsgemäß mögliche kontrollierte Ausbildung des Vakuums in der vollständig abgekühlten Backform ist sichergestellt, daß der Deckel die Backform dauerhaft und fest verschließt. In Abhängigkeit von der zu erzeugenden Backware liegt beispielsweise ein Unterdruck von ca. 0,4 bis 0,46 bar vor. Ab einem Wert von 0,3 bar ist eine ausreichende Schließkraft sichergestellt, welche den Verkauf der geschlossenen Backform ohne Gefahr von Beschädigung gewährleistet. Erfindungsgemäß wird der Deckel zu keiner Zeit mit einem Druck größer 0,5 bar beaufschlagt, so daß Blechdicken von 0,18 mm für den Deckel möglich sind, wobei der Deckel aus einer weichen Al-Fe-Legierung hergestellt werden kann. Hierdurch wird das Öffnen des Deckels wesentlich erleichtert.

Zusammenfassend ist folgendes festzustellen:

Die Erfindung bezieht sich auf ein Verfahren zur Herstellung von haltbaren Backwaren aus einer Backmasse, bei welchem eine Backform 1 mit der Backmasse gefüllt wird, die Backform 1 mit einem Deckel verschlossen wird, die Backmasse zusammen mit der Backform 1 bei geschlossenem Deckel 2 erwärmt wird, wobei die entstehenden Gase entweichen gelassen werden, die Backmasse mit der Backform 1 abgekühlt wird, wobei im Inneren der Backform 1 durch die Abkühlung der Backware ein ohne weiteres Zutun mittels des Deckels 2 einen luftdichten Verschluß der Backform 1 erzeugender Unterdruck entsteht, dadurch gekennzeichnet, daß ein Unterdruck in der vollständig abgekühlten Backform 1 in einem Bereich von 0,3 bis 0,5 bar erzeugt wird.

## Patentansprüche

1. Verfahren zur Herstellung von haltbaren Backwaren aus einer Backmasse, bei welchem eine Backform (1) mit der Backmasse gefüllt wird, die Backform (1) mit einem Deckel verschlossen wird, die Backmasse zusammen mit der Backform (1) bei geschlossenem Deckel (2) erwärmt wird, wobei die entstehenden Gase entweichen gelassen werden, die Backmasse mit der Backform (1) abgekühlt wird, wobei im Inneren der Backform (1) durch die Abkühlung der Backware ein ohne weiteres Zutun mittels des Deckels (2) einen luftdichten Verschluß der Backform (1) erzeugender Unterdruck entsteht, dadurch gekennzeichnet, daß ein Unterdruck in der vollständig abgekühlten Backform (1) in einem Bereich von 0,3 bis 0,5 bar erzeugt wird.

2. Verfahren nach Anspruch 1, dadurch gekennzeichnet, daß die Abkühlung in zumindest zwei Stufen erfolgt, und daß nach der ersten Abkühlstufe der bis zu diesem Zeitpunkt aufgetretene Unterdruck ausgeglichen wird.

3. Verfahren nach Anspruch 2, dadurch gekennzeichnet, daß der Ausgleich des Unterdrucks durch Zufuhr von Gasen in den Innenraum der Backform (1) erfolgt.

4. Verfahren nach Anspruch 3, dadurch gekennzeichnet, daß Stickstoff zugeführt wird.

5. Verfahren nach Anspruch 3, dadurch gekennzeichnet, daß Kohlensäure zugeführt wird.

6. Verfahren nach einem der Ansprüche 3 bis 5, dadurch gekennzeichnet, daß zur Zufuhr von Gasen eine Öffnung in dem Deckel (2) erzeugt wird, welche nach Ausgleich des Unterdrucks vor der weiteren Abkühlung verschlossen wird.

7. Verfahren nach einem der Ansprüche 2 bis 6, dadurch gekennzeichnet, daß der Ausgleich des Unterdrucks bei einem durch die Abkühlung hervorgerufenen Unterdruck von im wesentlichen 0,5 bar erfolgt.

8. Verfahren nach einem der Ansprüche 1 bis 7, dadurch gekennzeichnet, daß der Unterdruck in der vollständig abgekühlten Backform wenigstens 0,3 bar beträgt.

9. Deckel zur Durchführung des Verfahrens nach einem der Ansprüche 1 bis 8, dadurch gekennzeichnet, daß am Deckelrand eine Aufreißlasche (3) angebracht ist.

10. Deckel nach Anspruch 9, dadurch gekennzeichnet, daß der Deckelrand benachbart zu der Aufreißlasche (3) zumindest eine Anrißkerbe (4) aufweist.

11. Deckel nach Anspruch 9 oder 10, dadurch gekennzeichnet, daß der Deckel (2) mit einer vorgestanzten Rißlinie (5) versehen ist.

12. Deckel nach Anspruch 11, dadurch gekennzeichnet, daß die Rißlinie (5) nur einseitig an dem Deckel (2) ausgebildet.
